# EUROPEAN PATENT APPLICATION

(11) **EP 4 682 373 A1**
(43) Date of publication of application: **21.01.2026**
(21) Application number: 25187723.9
(22) Date of filing: 07.07.2025
(51) Int. Cl.: F02M 21/02

(54) **GAS FUEL INJECTOR**

(30) Priority: 18.07.2024 JP 2024114974
(71) Applicant: Nikki Co., Ltd., Atsugi, Kanagawa 243-0801 (JP)
(72) Inventor: MURAKAMI, Tsutomu, Atsugi-shi, 243-0801 (JP); AIZAWA, Shutaro, Atsugi-shi, 243-0801 (JP); KANEKO, Naokazu, Atsugi-shi, 243-0801 (JP)
(74) Representative: Boult Wade Tennant LLP

(57) **Abstract**

An object of the present invention is to provide a gas fuel injector including a normally-closed opening/closing valve, in which it is possible to prevent fuel leakage while the valve is closed even in a case where a pressure in a cylinder into which fuel is injected becomes excessively high or a valve body tilts.

An opening/closing valve (20A) includes a valve shaft (19), a valve body (21A), and a valve seat member (22). The valve seat member (22) includes: a valve hole (24); and a seat surface (23) having an annular shape that is formed at a distal end portion of a peripheral wall protruding along an outer periphery of the valve hole (24). The valve body (21A) includes a sealing surface (211A) having a tapered shape, an arch shape, or a spherical shape to be in contact with the seat surface (23) when the opening/closing valve (20A) is closed.

## Description

### Technical Field

The present invention relates to a normally-closed gas fuel injector for injecting gas fuel such as hydrogen gas, LPG, and CNG directly into a cylinder at a flow rate required by an engine driven by the gas fuel.

### Background Art

Conventionally, there is widely known an electromagnetically-driven injector that operates an opening/closing valve by exciting an electromagnetic coil to inject fuel into a cylinder at a flow rate required by an engine.

Such an opening/closing valve (electromagnetic valve) is classified into a normally-open type or a normally-closed type. In addition, the opening/closing valve is also classified into either a type in which the valve is closed by pressing a valve body against a valve seat (for example, see JP 2005-256638 A), or a type in which the valve is closed by attracting the valve body to the valve seat (for example, see JP H11-280605 A).

In a valve structure disclosed in JP H11-280605 A, an internal annular surface of a valve seat (port) and an external annular surface of a valve body come into sealing contact with each other while closing a nozzle. However, for example, in a case where the valve body tilts due to oscillation of a valve shaft at the time of opening/closing operation or the like, a gap is easily formed between the valve seat and the valve body. Thus, there has been an issue that it is likely to be difficult to ensure the airtightness between the inside and the outside.

### Citation List

### Patent Literature

Patent Literature 1: JP 2005-256638 A
Patent Literature 2: JP H11-280605 A

### Summary of Invention

### Technical Problem

The present invention is intended to solve the above issue, and an object thereof is to provide a gas fuel injector including a normally-closed opening/closing valve, in which it is possible to prevent fuel leakage while the valve is closed even in a case where a pressure in a cylinder into which fuel is injected becomes excessively high or a valve body tilts.

### Solution to Problem

In view of the above, the present invention provides a gas fuel injector that is a normally-closed electromagnetically-driven type and injects gas fuel directly into a cylinder of an engine, the gas fuel injector including: a main body having a fuel passage formed inside; an opening/closing valve that is disposed in the main body and is configured to open and close the fuel passage; and a solenoid that is disposed in the main body and is configured to drive the opening/closing valve to open during energization,
wherein the opening/closing valve includes: a valve shaft of which proximal end side is fixed to a plunger constituting the solenoid; a valve body provided on a distal end side of the valve shaft; and a valve seat member disposed in the main body to face the valve body,
wherein the valve seat member includes: a valve hole penetrating a center of the valve seat member; a peripheral wall formed to protrude annularly at a predetermined height along an outer periphery of an opening of the valve hole; and a seat surface having an annular shape that is formed at a distal end portion of the peripheral wall, and
the valve body includes: a sealing surface having a tapered shape, an arch shape, or a spherical shape to be in contact with the seat surface when the opening/closing valve is closed.

As described above, regarding the valve seat member and the valve body constituting the opening/closing valve in the normally-closed gas fuel injector, the seat surface of the valve seat member is formed at the distal end portion of the peripheral wall protruding annularly, and the sealing surface of the valve body is formed in a tapered shape, an arch shape, or a spherical shape with the center axis of the valve shaft as the center line. Therefore, even in a case where the valve body tilts due to oscillation of the valve shaft at the time of valve closing, it is possible to correct the tilt of the valve body and perform alignment with the valve closing operation because of the shapes of the seat surface and the sealing surface, to avoid generation of a gap between the seat surface and the sealing surface, and to prevent fuel leakage while the valve is closed.

In the present invention, the seat surface is formed at the distal end portion of the peripheral wall protruding annularly at the predetermined height along the outer periphery of the opening of the valve hole, and an outer edge side and an inner edge side of the distal end portion may be chamfered so that a longitudinal cross-section of the seat surface has a semicircular shape. With this configuration, when alignment is performed with the inclined sealing surface of the valve body in contact with the seat surface during the valve closing operation, alignment operation is carried out while the inclined sealing surface smoothly slides on the seat surface having chamfered corners, and moreover the combination of the curved surfaces makes it easier to ensure close contact between the seat surface and the sealing surface on a constant basis.

In the present invention, the opening/closing valve may be an outwardly-opening type, and the valve body may be disposed to protrude outside the valve hole and may be shaped such that a side with the sealing surface protrudes in a direction toward the proximal end side of the valve shaft. With this configuration, even in a case where an in-cylinder pressure excessively increases, a biasing force in a valve closing direction due to the high in-cylinder pressure in combination with the inclined surface of the sealing surface of the valve body results in a further increase in a degree of the close contact with the seat surface because of the outwardly-opening structure of the opening/closing valve, and thus fuel leakage can be easily further prevented.

### Advantageous Effects of Invention

According to the present invention, it is possible to enhance alignability and sealing properties of a valve body to effectively prevent fuel leakage while a valve is closed.

### Brief Description of Drawings

FIG. 1 is a longitudinal cross-sectional view illustrating a first embodiment of a gas fuel injector according to the present invention;
FIG. 2 is an enlarged longitudinal cross-sectional view of an opening/closing valve portion in the embodiment illustrated in FIG. 1;
FIG. 3 is an enlarged perspective partial cross-sectional view of the opening/closing valve portion in the embodiment illustrated in FIG. 1;
FIG. 4 is a longitudinal cross-sectional view illustrating a second embodiment of a gas fuel injector according to the present invention; and
FIG. 5 is a longitudinal cross-sectional view illustrating a third embodiment of a gas fuel injector according to the present invention.

### Description of Embodiments

Hereinafter, embodiments of the present invention will be described with reference to the drawings. Note that, in the present invention, gas fuel refers to fuel that is supplied to an engine in a gas state and burned, such as LPG, CNG, LNG, and hydrogen gas.

### <First Embodiment>

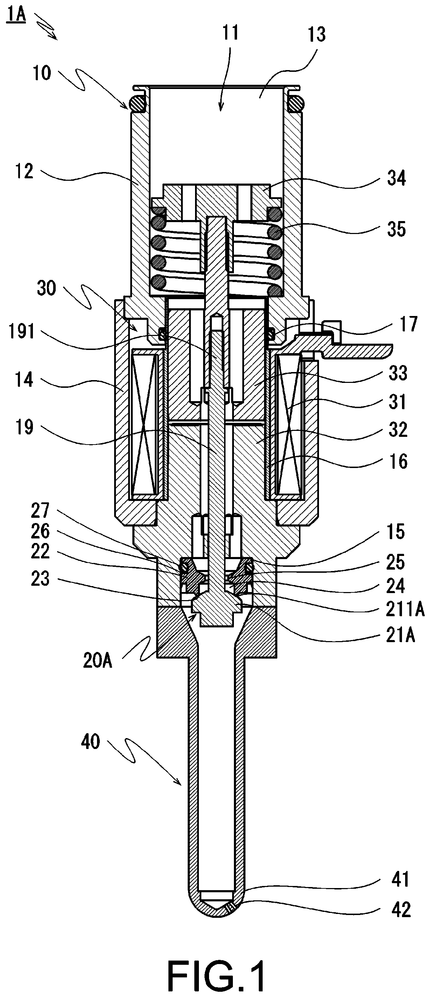

FIG. 1 is a longitudinal cross-sectional view illustrating a first embodiment of a gas fuel injector in a valve closed state according to the present invention.

A gas fuel injector 1A of the present embodiment includes, in a cylindrical main body 10 having a fuel passage 11 leading from a fuel inlet 13 on a proximal end side, an opening/closing valve 20A that opens and closes the fuel passage 11 and a solenoid 30 that drives the opening/closing valve 20A to open during energization. The gas fuel injector 1A is a device for supplying gas fuel, of which pressure is reduced and adjusted to a predetermined pressure, into a cylinder of an engine (not illustrated) at a flow rate required by the engine.

When the gas fuel injector 1A is used, an electromagnetic coil 31 of the solenoid 30 is energized and excited, so that a fixed iron core 32 attracts a plunger (movable iron core) 33 and opens the opening/closing valve 20A, and the gas fuel that has passed through the opening/closing valve 20A is injected directly into the cylinder of the engine from an injection hole 42 opened at a distal end 41 of a nozzle 40. The gas fuel injector 1A is a normally-closed electromagnetically-driven injector.

The main body 10 includes a cylindrical inlet body 12 having the fuel inlet 13 and an outlet body 14 having a valve seat member holder 15, which are formed of a magnetic material such as metal.

A collar member 16 for positioning and sealing used in combination with an O-ring 17 is provided inside the inlet body 12 and the outlet body 14.

The opening/closing valve 20A includes a valve body 21A and a valve seat member 22, which are formed as separate components from the main body 10. The opening/closing valve 20A is a poppet-type valve in which the valve body 21A is driven perpendicularly with respect to the valve seat member 22.

The valve body 21A is provided on a distal end side of a valve shaft 19 of which proximal end 191 side is fixed to the plunger 33, and performs a reciprocating motion in an axial direction with the valve shaft 19.

The valve body 21A is made of metal and is formed integrally with the valve shaft 19.

The valve seat member 22 is held by the valve seat member holder 15 and is disposed so as to face the valve body 21A. The valve seat member 22 includes a seat surface 23 in contact with or separate from a sealing surface 211A of the valve body 21A, a valve hole 24 penetrating a central portion, and an orifice 25 for flow rate measurement formed to be narrowed at an intermediate position of the valve hole 24.

The valve seat member 22 has a recessed groove 26 that is formed on an outer peripheral surface and in which an O-ring 27 is mounted, so that an outer peripheral side is in airtight contact with the main body 10.

The valve seat member 22 is made of a polymer material, and in particular preferably a resin material.

The solenoid 30 includes the electromagnetic coil 31, the fixed iron core 32 located inside the electromagnetic coil 31, the plunger 33 provided to face the fixed iron core 32, a spring guide 34, and a coil spring 35. All the components constituting the solenoid 30 are coaxially arranged.

As described above, in the present embodiment, the opening/closing valve 20A is configured such that the valve body 21A that performs a reciprocating motion in the axial direction is provided on the distal end side of the valve shaft 19 of which proximal end 191 side is fixed to the plunger 33 constituting the solenoid 30, and that the annular seat surface 23 in contact with or separate from the sealing surface 211A formed on a proximal end side of the valve body 21A is provided on an outer periphery of an opening of the valve hole 24 penetrating the valve seat member 22.

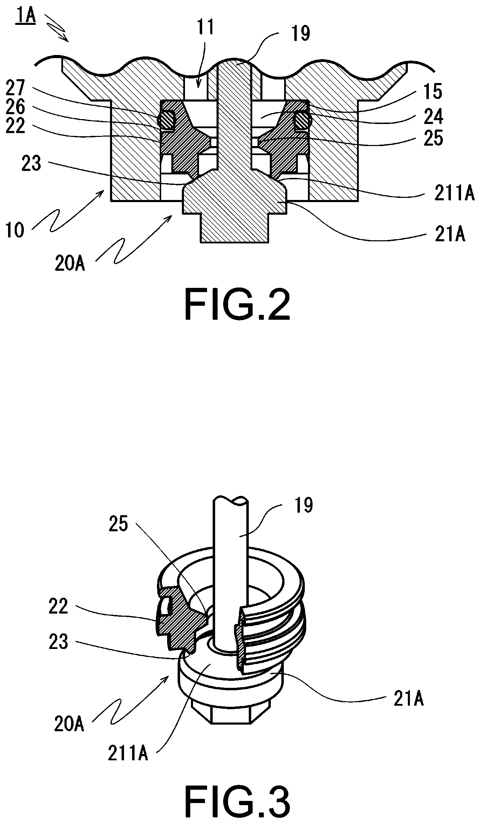

Further, in the valve body 21A, as illustrated in a longitudinal cross-sectional view of FIG. 2 in which the opening/closing valve 20A is partially enlarged, the sealing surface 211A including a portion to be in contact with the seat surface 23 when the valve is closed is formed in a tapered shape (truncated cone shape) of which center line coincides with center axes of the plunger 33 and the valve shaft 19. Thus, even when the valve body 21A comes into contact with the seat surface 23 in a tilted state at the time of valve closing, the valve body 21A is guided by the inclination of the tapered sealing surface 211A to be aligned.

That is, in the normally-closed gas fuel injector 1A of the present embodiment, the sealing surface 211A of the valve body 21A that constitutes the opening/closing valve 20A and includes the portion to be in contact with the seat surface 23 is formed in a tapered shape of which center line coincides with the center axis of the valve shaft 19, which makes it possible to avoid generation of a gap between the sealing surface 211A of the valve body 21A and the seat surface 23 of the valve seat member 22 at the time of valve closing and to reliably prevent fuel leakage.

In addition, in the present embodiment, as illustrated in a perspective partial cross-sectional view of FIG. 3 in which a portion of the opening/closing valve 20A is enlarged, the seat surface 23 is formed at a distal end portion of a peripheral wall protruding annularly at a predetermined height along the outer periphery of the opening of the valve hole 24 of the valve seat member 22, and an outer edge side and an inner edge side of the distal end portion are chamfered so that a longitudinal cross-section has a semicircular shape.

With this configuration, alignment is performed on the valve body 21A tilted at the time of valve closing with the sealing surface 211A in contact with the annular seat surface 23 having a longitudinal cross-section of a semicircular shape.

Therefore, even when a contact angle between the sealing surface 211A and the seat surface 23 changes while the sealing surface 211A slides on the seat surface 23, the combination of the curved surfaces can realize smooth alignment operation while keeping a close contact state between the sealing surface 211A and the seat surface 23, and enhance sealing performance when the valve is closed.

Furthermore, in the gas fuel injector 1A of the present embodiment, as illustrated in FIG. 1, the valve body 21A is provided on the distal end side of the valve shaft 19 penetrating the valve hole 24, and the valve body 21A is disposed to protrude to a portion outside the valve hole 24 and is shaped such that a side with the sealing surface 211A that comes into contact with the seat surface 23 protrudes in a direction toward the proximal end side of the valve shaft 19, which means that an outwardly-opening structure (check valve structure) is adopted for the opening/closing valve.

By adopting such a check valve structure, even if an in-cylinder pressure excessively increases, the valve body 21A is just biased in a direction toward the seat surface 23, and thus fuel leakage can be easily further minimized.

In addition, as described above, since the valve body 21A is formed such that the side with the sealing surface 211A that faces the seat surface 23 protrudes in a truncated cone shape, the biasing force in the valve closing direction due to the high in-cylinder pressure in combination with the shape of the sealing surface 211A results in a further increase in the degree of the close contact with the seat surface 23 together with alignment of the valve body 21A, and thus fuel leakage can be easily further prevented.

### <Second Embodiment>

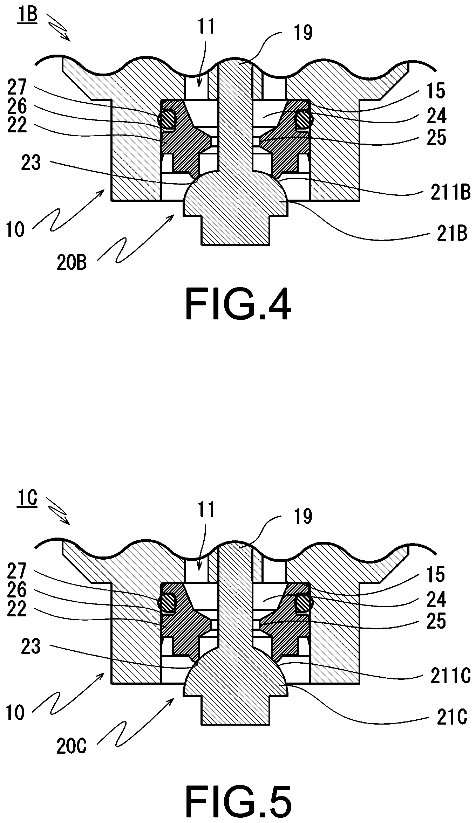

FIG. 4 is an enlarged longitudinal cross-sectional view of a portion of an opening/closing valve 20B in a gas fuel injector 1B according to a second embodiment as a modification example of the above-described gas fuel injector 1A. Note that the same components as those of the gas fuel injector 1A are denoted by the same reference signs, and the description thereof will be omitted.

This modification example is a sealing surface 211B of a valve body 21B constituting the opening/closing valve 20B is formed in a spherical shape.

More specifically, the sealing surface 211B corresponds to a surface of a rotating body, which is drawn by rotating, about the central axis of the valve shaft 19, an arc of a sector having a central angle of 90 degrees disposed such that one radius is parallel to the central axis of the valve shaft 19 at a certain distance perpendicularly away from the central axis of the valve shaft 19 and that the arc faces toward the seat surface 23.

With this configuration, similarly to the above-described tapered sealing surface 211A, a surface side to be in contact with the seat surface 23 is inclined with a diameter decreasing as it protrudes. Therefore, even when the valve body 21B comes into contact with the seat surface 23 in a tilted state at the time of valve closing, the valve body 21B is guided by the inclination of the spherical sealing surface 211B to be aligned.

In addition, since the sealing surface 211B of the valve body 21B has a spherical shape, when alignment is performed on the valve body 21B that has tilted due to oscillation of the valve shaft 19, the valve body 21B can correct the tilt of the valve shaft 19 while rotating with the seat surface 23 in close contact with the sealing surface 211B.

Also in the present embodiment, the annular seat surface 23 has a longitudinal cross-section of a semicircular shape, leading to a configuration in which the spherical surface of the sealing surface 211B of the valve body 21B and the curved surface of the seat surface 23 are in contact with each other.

Therefore, sliding with contact between these curved surfaces can achieve smoother alignment operation, and wear of the contact surfaces is easily minimized.

### <Third Embodiment>

FIG. 5 is an enlarged longitudinal cross-sectional view of a portion of an opening/closing valve 20C in a gas fuel injector 1C according to a third embodiment as a modification example of the above-described gas fuel injector 1A. Note that the same components as those of the gas fuel injector 1A are denoted by the same reference signs, and the description thereof will be omitted.

This modification example is a sealing surface 211C of a valve body 21C constituting the opening/closing valve 20C is formed in a spherical shape.

More specifically, the sealing surface 211C corresponds to a part of a surface of a rotating body, which is drawn by rotating, about the central axis of the valve shaft 19, an arc of a sector having a central angle of 90 degrees disposed such that one radius coincides with the central axis of the valve shaft 19 and that the arc faces toward the seat surface 23.

With this configuration, similarly to the above-described tapered sealing surface 211A, a surface side to be in contact with the seat surface 23 is inclined with a diameter decreasing as it protrudes. Therefore, even when the valve body 21C comes into contact with the seat surface 23 in a tilted state at the time of valve closing, the valve body 21C is guided by the inclination of the spherical sealing surface 211C to be aligned.

In addition, since the sealing surface 211C of the valve body 21C has a spherical shape, when alignment is performed on the valve body 21C that has tilted due to oscillation of the valve shaft 19, the valve body 21C can correct the tilt of the valve shaft 19 while rotating with the seat surface 23 in close contact with the sealing surface 211C.

Also in the present embodiment, the annular seat surface 23 has a longitudinal cross-section of a semicircular shape, leading to a configuration in which the spherical surface of the sealing surface 211C of the valve body 21C and the curved surface of the seat surface 23 are in contact with each other.

Therefore, sliding with contact between these curved surfaces can achieve smoother alignment operation, and wear of the contact surfaces is easily minimized.

The shape of a sealing surface may be an axisymmetric shape that converges toward the central axis of the valve shaft 19 with its vertex directed toward the valve seat member 22. In the first embodiment, a tapered shape (truncated cone shape) is adopted, and in the second embodiment and the third embodiment, a spherical shape is adopted. In other cases, for example, an arch shape may be adopted.

As described above, according to the present invention, in a gas fuel injector including a normally-closed opening/closing valve, it is possible to reliably prevent fuel leakage while the valve is closed even in a case where a pressure in a cylinder becomes excessively high or a valve body tilts.

### Reference Signs List

1A, 1B, 1C Gas fuel injector
10 Main body
11 Fuel passage
12 Inlet body
13 Fuel inlet
14 Outlet body
15 Valve seat member holder
16 Collar member
17 O-ring
19 Valve shaft
20A, 20B, 20C Opening/closing valve
21A, 21B, 21C Valve body
22 Valve seat member
23 Seat surface
24 Valve hole
25 Orifice
26 Recessed groove
27 O-ring
30 Solenoid
31 Electromagnetic coil
32 Fixed iron core
33 Plunger
34 Spring guide
35 Coil spring
40 Nozzle
41 Distal end
42 Injection hole
211A, 211B, 211C Sealing surface

## Claims

1. A gas fuel injector (1A) that is a normally-closed electromagnetically-driven type and injects gas fuel directly into a cylinder of an engine, the gas fuel injector (1A) comprising:
a main body (10) having a fuel passage (11) formed inside;
an opening/closing valve (20A) that is disposed in the main body (10) and is configured to open and close the fuel passage (11); and
a solenoid (30) that is disposed in the main body (10) and is configured to drive the opening/closing valve (20A) to open during energization,
wherein the opening/closing valve (20A) includes:
a valve shaft (19) of which proximal end side is fixed to a plunger (33) constituting the solenoid (30);
a valve body (21A) provided on a distal end side of the valve shaft (19); and
a valve seat member (22) disposed in the main body (10) to face the valve body (21A),
wherein the valve seat member (22) includes:
a valve hole (24) penetrating a center of the valve seat member (22);
a peripheral wall formed to protrude annularly at a predetermined height along an outer periphery of an opening of the valve hole (24); and
a seat surface (23) having an annular shape that is formed at a distal end portion of the peripheral wall, and
the valve body (21A) includes:
a sealing surface (211A) having a tapered shape, an arch shape, or a spherical shape to be in contact with the seat surface (23) when the opening/closing valve (20A) is closed.

2. The gas fuel injector (1A) according to claim 1, wherein an outer edge side and an inner edge side of the seat surface (23) are chamfered so that a longitudinal cross-section of the seat surface (23) has a semicircular shape.

3. The gas fuel injector (1A) according to claim 1, wherein the valve seat member (22) is made of resin.

4. The gas fuel injector (1A) according to claim 1, 2 or 3, wherein the opening/closing valve (20A) is an outwardly-opening type, and the valve body (21A) is disposed to protrude outside the valve hole (24) and is shaped such that a side with the sealing surface (211A) protrudes in a direction toward the proximal end side of the valve shaft (19).
